# EUROPEAN PATENT SPECIFICATION

(11) **EP 1 122 294 B1**
(45) Date of publication and mention of the grant of the patent: **24.11.2004**
(21) Application number: 00104280.3
(22) Date of filing: 01.03.2000
(51) Int. Cl.: C10G 9/38

(54) **Process and apparatus for the pyrolysis of hydrocarbon gas**
Verfahren und Apparat zur Pyrolyse von Kohlenwasserstoffgas
Procédé et appareillage pour la pyrolyse de gas hydrocarboné

(30) Priority: 02.02.2000 JP 2000025251
(43) Date of publication of application: 08.08.2001
(73) Proprietor: Matsumura, Shuzo, London W8 4HY (GB); THE JAPAN STEEL WORKS, LTD., Tokyo100 (JP); TOHO GAS CO., LTD., Aichi 456 (JP); Kubota Corporation, Osaka-shi, Osaka 556 (JP)
(72) Inventor: Matsumura, Shuzo, London W8 4HY (GB); Yoneta, Masaji, c/o The Japan Steel Works Ltd., Fuchu-shi, Tokyo 183-8503 (JP); Denda, Rokuro, c/o The Japan Steel Works Ltd., Fuchu-shi, Tokyo 183-8503 (JP); Umeda, Yoshito, c/o Toho Gas Co., Ltd., Tokai-city, Aichi 476-8501 (JP); Hattori, Masao, c/o Toho Gas Co., Ltd., Tokai-city, Aichi 476-8501 (JP); Hagi, Satoshi, c/o Toho Gas Co., Ltd., Tokai-city, Aichi 476-8501 (JP); Funakoshi, Jun, c/o Kubota Corporation, Hirakata-shi, Osaka 573-8573 (JP); Kosaka, Akira, c/o Kubota Corporation, Hirakata-shi, Osaka 573-8573 (JP)
(74) Representative: Grünecker, Kinkeldey, Stockmair & Schwanhäusser Anwaltssozietät

(56) References cited:
- EP-A- 0 607 862
- US-A- 2 548 759
- US-A- 3 741 736
- US-A- 4 044 068
- US-A- 5 583 240
- DATABASE WPI Section Ch, Week 200026 Derwent Publications Ltd., London, GB; Class H04, AN 2000-296076 XP002185528 & JP 2000 080385 A (JAPAN STEEL WORKS LTD) , 21 March 2000 (2000-03-21)

## Description

The present invention relates to an apparatus for pyrolyzing a hydrocarbon gas, optionally mixed with water vapor, to produce an olefin-based organic compound or a synthetic gas containing hydrogen or an olefin-based organic compound

From US-A-4,044,068, there is known an apparatus for the autothermic cracking of ethane to ethylene. Said conventional apparatus comprises an elongated housing; means for introducing ethane; outlet means for discharging a reaction mixture; a plurality of porous tube reaction units; and means for introducing oxygen into said tubes.

From US-A-3,741,736, there is known an apparatus for preparing acetylene-ethylene mixtures by reacting at least one light saturated hydrocarbon with oxygen or an oxygen containing gas in a diffusion flame. Said diffusion flame is produced in a combustion chamber having at least one nozzle for the passage of said hydrocarbon and a flow channel surrounding said nozzle for the passage of oxygen or oxygen containing gas. Each of said nozzle and said passage are discharging gas having a momentum sufficient to produce turbulent flow.

From US-A-2,548,759, there is known an apparatus for the production of diolefin hydrocarbons from hydrocarbons wherein oxygen can be introduced through a porous refractory member to provide a mixture of the hydrocarbon feed with the oxygen, thereby achieving a partial oxidation.

From US-A-5,583,240, there is known an apparatus for the dehydrogenation of hydrocarbons using oxygen. Said conventional apparatus is a multiple tube reactor wherein hydrocarbon feed is fed through an inlet port in the top of the reactor into an inlet plenum chamber connected to each tube. Oxygen is introduced in the shell of the reactor. The resultant product can exit via each tube. A cooling section is provided for cooling the reaction products.

Finally, EP-A-607 862 discloses an apparatus for obtaining hydrocarbon oil from waste plastic material or waste rubber material. Said conventional apparatus comprises a thermal cracking portion for effecting thermal cracking of waste plastic material or waste rubber material for obtaining a thermal cracking product; a catalytic cracking portion in which the thermal cracking product is subjected to catalytic cracking to obtain a catalytic cracking product; a cooling portion for cooling the catalytic cracking product to obtain a first hydrocarbon oil; an oligomerization portion in which the cracking gas component is subjected to oligomerization by using polymerisation catalysts to obtain a second hydrocarbon oil; and a recovery portion for recovering the first and second hydrocarbon oils.

### SUMMARY OF THE INVENTION

An object of the invention is to provide an apparatus for the pyrolysis of a hydrocarbon gas which does not require high temperature heating and thus can be operated at reduced facility costs and undergoes less caulking.

The inventive apparatus provides for rapidly cooling the pyrolyzed gas to reduce the equipment costs and to increase the yielding ratio of useful gas.

The inventive apparatus comprises a decomposition reaction column having an inlet provided at one end thereof through which a hydrocarbon gas, optionally mixed with water vapor, may be supplied thereinto; an outlet provided at the other end thereof through which an olefin-based organic compound gas produced is dischargeable; a group of porous tubes extending vertically within said reaction column; a header connected to said porous tubes for supplying air or oxygen into said porous tubes; wherein said hydrocarbon gas, optionally mixed with water vapor is flown along the exterior of said porous tubes; and wherein said air or oxygen from the interior is homogenously jetted to the exterior of said porous tubes in a direction perpendicular to said stream of hydrocarbon gas, optionally mixed with water vapor, wherein an ignition system is provided for forming a diffusion flame layer on the outer surface of said porous tubes, said diffusion flame layer serving as a heat source required for allowing said hydrocarbon gas to undergo a radical reaction.

Preferred embodiments and further improvements are defined in the depending subclaims.

In order to form the foregoing diffusion flame layer, a hydrocarbon gas to be decomposed, optionally mixed with water vapor, is allowed to flow uniformly through the gap between various porous tubes constituting a group of porous tubes extending vertically in a decomposition reaction column. Air or oxygen is then homogeneously jetted from the interior to the exterior of the porous tubes in the direction perpendicular to a stream of the hydrocarbon gas to be decomposed, optionally mixed with water vapor. The hydrocarbon gas to be decomposed, optionally mixed with water vapor, is then ignited to form a diffusion flame layer on the outer surface of the porous tubes. Alternatively, air or oxygen is allowed to flow uniformly through the gap between various porous tubes constituting a group of porous tubes extending vertically in a decomposition reaction column. A hydrocabon gas to be decomposed, optionally mixed water vapor, is supplied into the porous tubes. Air or oxygen is then homogeneously jetted from the exterior to the interior of the porous tubes in the direction perpendicular to a stream of a hydrocarbon gas to be decomposed, optionally mixed with water vapor.

Further, according to a preferred embodiment, the inventive apparatus is provided with a gas rapidly cooling device adjacent to the pyrolysis portion having the porous tubes.

### BRIEF DESCRIPTION OF DRAWINGS

Fig. 1 is a diagram illustrating the concept of the apparatus for the pyrolysis of a hydrocarbon gas according to the first example of the invention.
Fig. 2 is an enlarged view of Portion A of Figs. 1 and 3.
Fig. 3 is a diagram illustrating the concept of the apparatus for the pyrolysis of a hydrocarbon gas, optionally mixed with water vapor, according to the second example of the invention.
Fig. 4 is a partially sectional enlarged view of the double tube portion of Fig. 3.
Fig. 5 is a diagram illustrating the solid starting material gasification apparatus connected to the pyrolysis apparatus according to the invention.
Fig. 6 is a diagram illustrating the concept of the apparatus for the pyrolysis of a hydrocarbon gas with a gas rapidly cooling column according to the third example of the invention.
Fig. 7 is a plan view of a gas rapidly cooling portion of apparatus for pyrolysis of a hydrocarbon gas shown in Fig. 6.

### DETAILLED DESCRIPTION OF PREFERRED EMBODIMENTS

Modes for carrying out the invention will be described hereinafter with reference to the following examples in connection with the drawings.

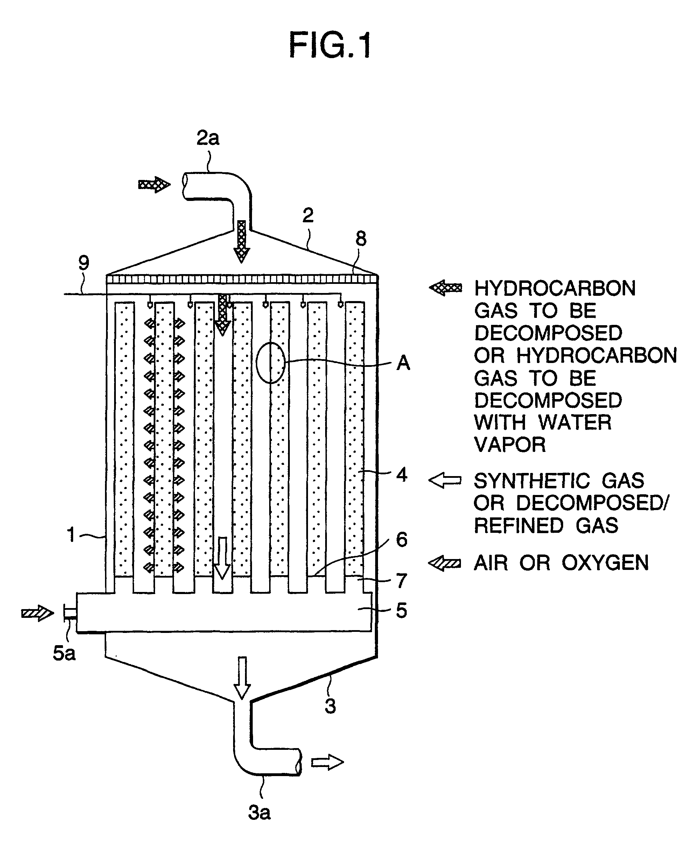

Fig. 1 is a diagram illustrating the concept of an apparatus for the pyrolysis of a hydrocarbon gas according to the first example of the invention. In this diagram, the reference numeral 1 indicates a decomposition reaction column comprising a diffuser 2 provided at the upper portion thereof and a reducer 3 provided at the lower portion thereof. Provided extending vertically in the decomposition reaction column 1 are a group of porous tubes. The reaction column may be cylindrical or prismatic.

The various porous tubes constituting the foregoing group of porous tubes are each made of a porous metal or a metal film material having a pore size of the order of MF (microfiltration) or UF (ultrafiltration). As the porous metal or metal film material there may be used SUS, tool steel, inconnel, titanium alloy, aluminum alloy or the like.

The various porous tubes 4 are each blocked at the upper end thereof and connected to the header 5 at the lower end thereof. The header 5 is a hollow plate. Provided protruding from the upper surface of the header 5 are non-porous tubes 7 which are connected to the foregoing porous tubes 4 with a joint 6, respectively.

Provided at the lower end of the diffuser 2 and above the group of porous tubes is a distributor 8. Provided in the gap between the outer surface of the upper portion of the various porous tubes 4 is an ignition system 9.

The diffuser 2 is provided with an inlet 2a through which a hydrocarbon gas to be decomposed such as paraffin gas, optionally mixed with water vapor, is supplied into the decomposition reaction column 1. The reducer 3 is provided with an outlet 3a through which a gas such as olefinic gas obtained by decomposition and purification is discharged out of the decomposition reaction column 1. The header 5 is provided with a nozzle 5a through which air or oxygen is supplied into the decomposition reaction column 1.

The operation of the decomposition reaction column 1 will be described hereinafter.

A hydrocarbon gas to be decomposed, optionally mixed with water vapor, is supplied into the decomposition reaction column 1 through the inlet 2a, rectified through the distributor, and then allowed to flow downward from the upper portion of the reaction column 1 uniformly through the gap between the various porous tubes 4.

Separately, air or oxygen which has been supplied into the reaction column 1 through the supply nozzle 5a is then jetted homogeneously out of the porous tubes through the pores in the porous metal material in the direction perpendicular to the stream of the hydrocarbon gas to be decomposed, optionally mixed with water vapor, due to the difference in pressure between inside and outside the porous tubes.

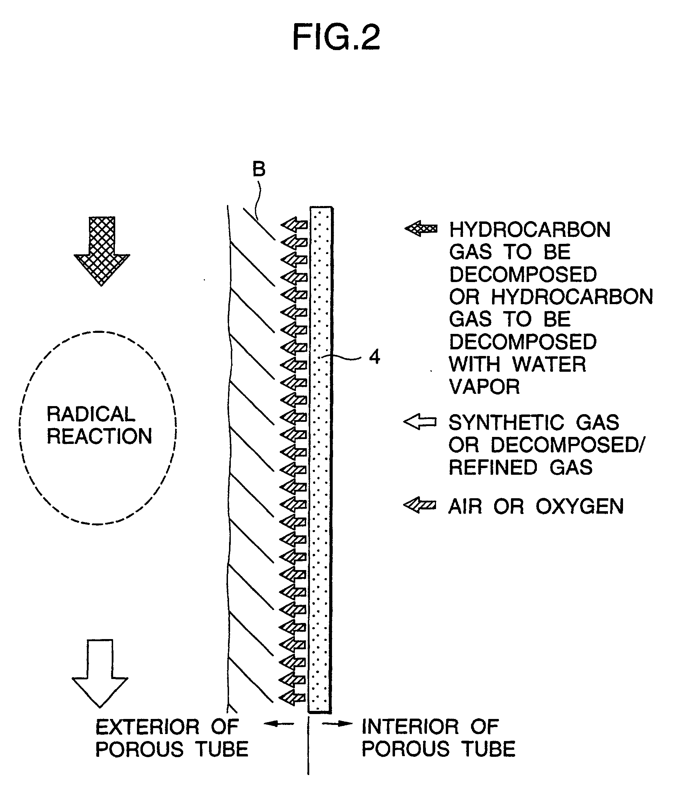

When the gaseous mixture is ignited by the ignition system 9 under these conditions, a diffusion flame layer B is then formed on the outer surface of the porous tubes 4 as shown in Fig. 2. With this diffusion flame layer as a heat source, the hydrocarbon gas to be decomposed, such as paraffinic gas, optionally mixed with water vapor, undergoes radical reaction (free radical reaction) to produce a gaseous olefinic organic compound having a shorter chain chemical composition or a synthetic gas containing hydrogen, methane, carbon monoxide and a gaseous olefinic organic compound having a shorter chain chemical composition.

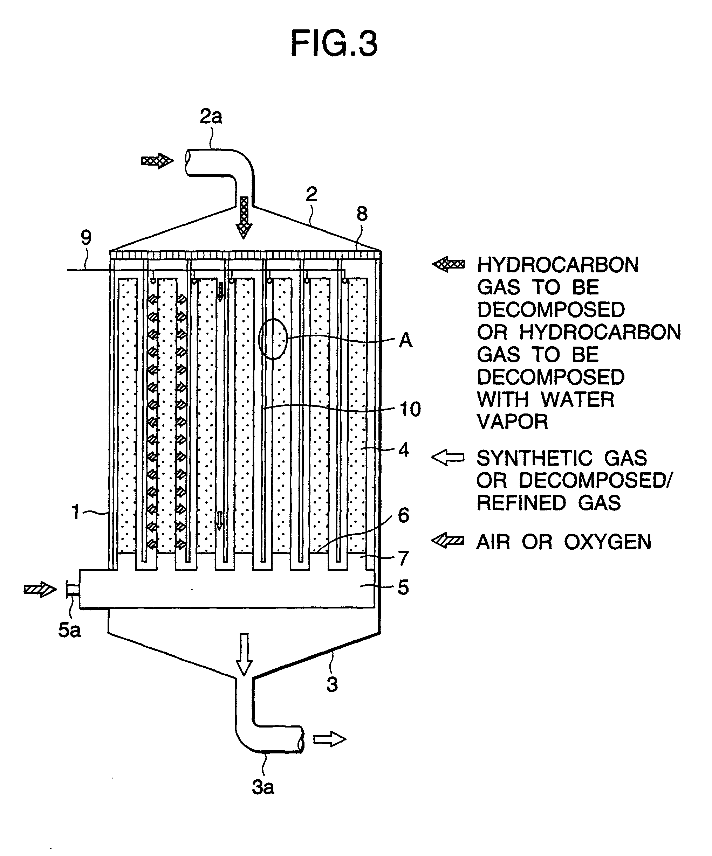

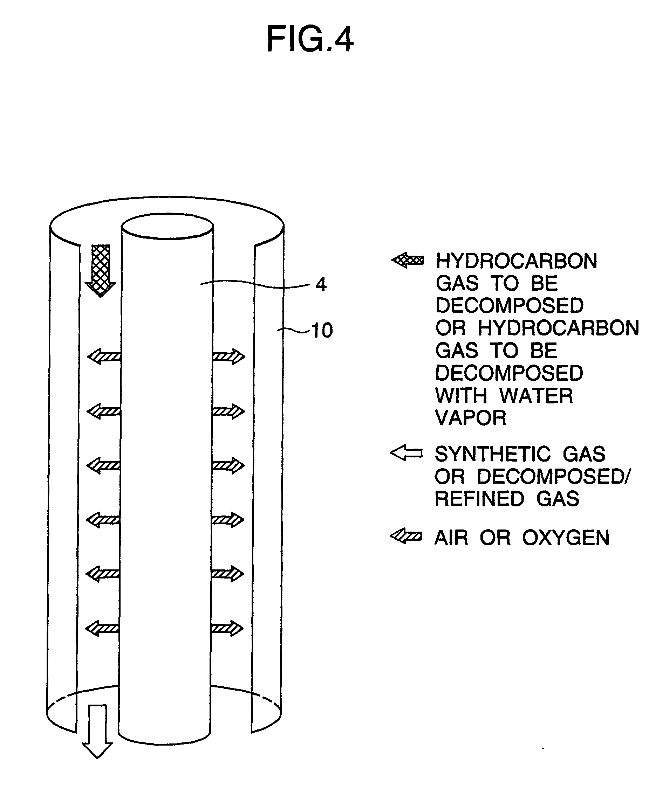

Fig. 3 is a diagram illustrating the concept of an apparatus for the pyrolysis of a hydrocarbon gas according to the second example of the invention. Since the present example differs from the first example only in that non-porous tubes 10 are provided concentrically of the porous tubes 4 surrounding the periphery of the porous tubes 4, respectively, with a gap interposed therebetween, the description of other structures will be omitted. In some detail, as shown in Fig. 4, air is allowed to flow through the inner tube of a double tube consisting of the porous tube 4 as an inner tube and the non-porous tube 10 as an outer tube while a hydrocarbon gas to be decomposed, optionally mixed with water vapor, is allowed the flow space (double tube portion) defined by the inner tube and the outer tube, whereby the hydrocarbon gas to be decomposed undergoes radical reaction as in the first example to produce a gaseous olefinic organic compound having a shorter chain chemical composition or a synthetic gas containing hydrogen, methane, carbon monoxide and a gaseous olefinic organic compound having a shorter chain chemical composition.

In accordance with the foregoing example, air or oxygen is allowed to flow from the interior of the porous tubes 4 to the exterior of the porous tubes 4 while a hydrocarbon gas to be decomposed, optionally mixed water vapor, is allowed to flow along the exterior of the porous tubes 4. However, a hydrocarbon gas to be decomposed, optionally mixed with water vapor, is allowed to flow the interior of the porous tubes 4 while air or oxygen may be allowed to flow from the exterior of the porous tube 4 to the interior of the porous tubes 4.

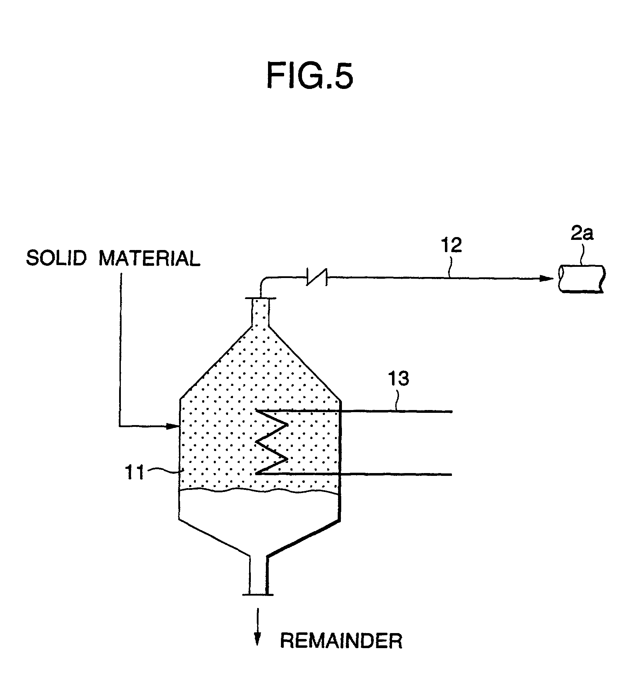

Further, in accordance with the foregoing example, a hydrocarbon gas to be decomposed, optionally mixed with water vapor, is supplied into the decomposition reaction column 1. As shown in Fig. 5, however, a gas produced by a process which comprises supplying a solid starting material such as waste plastic into a gasification apparatus 11 where it is then heated by a heating device 13 to decompose to a gas and a residue, and decomposed gas may be applied into the reaction column 1 through the inlet 2a.

Moreover, in accordance with the foregoing example, the decomposition reaction column 1 is provided with the inlet 2a at the upper portion thereof and the outlet 3a at the lower portion thereof. However, the decomposition reaction column 1 may be provided with the inlet 2a at the lower portion thereof and the outlet 3a at the upper portion thereof.

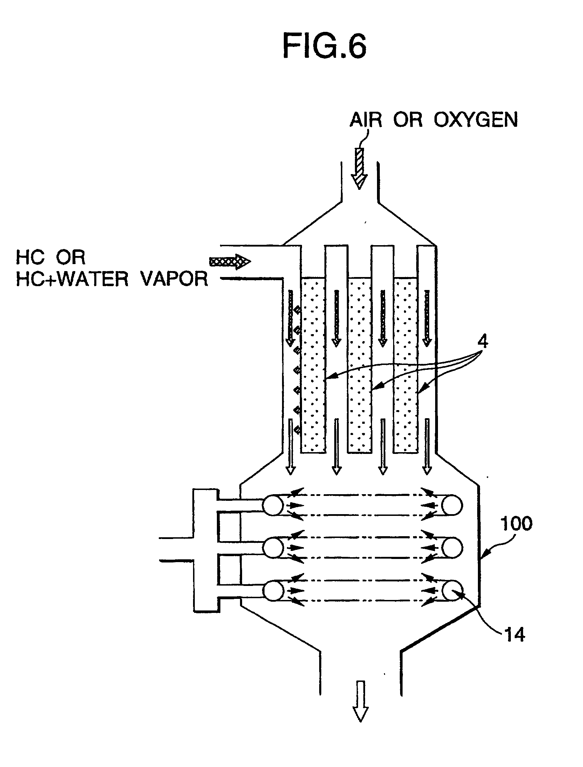

Fig. 6 is a diagram illustrating the concept of an apparatus for the pyrolysis of a hydrocarbon gas according to the first example of the invention. In this embodiment, an upper portion of reaction column is the same as the structure described in the first embodiment, and a lower portion corresponds to a gas rapidly cooling column 100 for the pyrolyzed gas produced in the upper portion. Coolant spraying tubes 14 are arranged along with an inner peripheral portion of the gas rapidly cooling column 100.

The operation of this device will be described hereinafter.

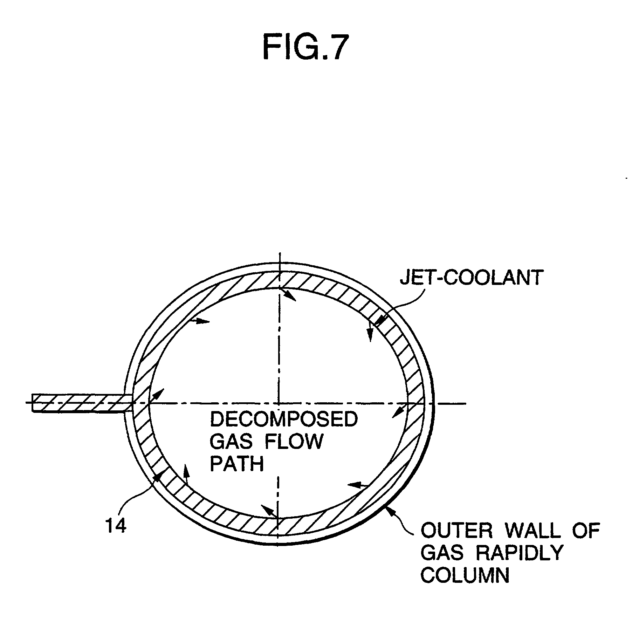

The pyrolyzed gas produced in the reaction column as shown in Fig. 6 is transferred directly from the reaction column to the gas rapidly cooling column 100. As shown in Figs. 6 and 7, coolant sprays from a slit or a spraying hole provided on the coolant spray tubes 14 toward the gas flow path in such a manner that the coolant sprays slantly with respect to the center of a gas cooling portion to achieve a spiral air flow in the gas rapidly cooling portion as shown in Fig. 7. The coolant spray tubes 14 are arranged in the gas rapidly cooling column 100 to rapidly cool the gas produced in the upper portion of reaction column 1.

Unlike the conventional decomposition processes and apparatuses, the pyrolysis apparatus according to the present invention is characterized by allowing a hydrocarbon gas obtained by the evaporation of naphtha or the like, optionally mixed with water vapor, to come in direct contact with air or oxygen to form a diffusion flame layer, and then allowing the mixture to undergo radical reaction with the diffusion flame layer as a heat source. By using the apparatus of the invention, a desired olefin-based organic compound gas or a synthetic gas containing hydrogen, methane, carbon monoxide and an olefin-based organic compound gas having a short chain chemical composition can be produced without a high temperature and pressure process, making it possible to reduce the facility cost and avoid caulking.

Further, after said radical reaction, the reacted gas can be rapidly cooled to increase yield of the synthetic gas to be desired.

## Claims

1. An apparatus for pyrolyzing a hydrocarbon gas comprising:
a decomposition reaction column (1) having an inlet provided at one end thereof through which a hydrocarbon gas, optionally mixed with water vapour, may be supplied thereinto;
an outlet provided at the other end thereof through which an olefin-based organic compound gas produced is dischargeable;
a group of porous tubes (4) extending vertically within said reaction column;
a header connected to said porous tubes for supplying air or oxygen into said porous tubes;
wherein said hydrocarbon gas, optionally mixed with water vapour is flown along the exterior of said porous tubes (4); and
wherein said air or oxygen from the interior is homogenously jetted to the exterior of said porous tubes (4) in a direction perpendicular to said stream of hydrocarbon gas, optionally mixed with water vapour, wherein an ignition system (9) is provided for forming a diffusion flame layer (B) on the outer surface of said porous tubes (4), said diffusion flame layer serving as a heat source required for allowing said hydrocarbon gas to undergo a radical reaction.

2. The apparatus for pyrolyzing a hydrocarbon gas according to claim 1,
wherein a non-porous tube (7) is provided concentrically of said porous tubes (4) surrounding the periphery of said porous tubes.

3. The apparatus for pyrolyzing a hydrocarbon gas according to claim 1 or 2,
wherein a distributor (8) is provided at the inlet side of said decomposition reaction column (1).

4. The apparatus for pyrolyzing a hydrocarbon gas according to claims 1, 2 or 3, further comprising:
a gas cooling portion (100) directly connected to said decomposition reaction column (1).

## Patentansprüche

1. Vorrichtung zum Pyrolysieren eines Kohlenwasserstoffgases, die umfasst:
eine Zersetzungsreaktionssäule (1) mit einem Einlass, der an einem Ende derselben vorhanden ist und über den ein Kohlenwasserstoffgas, das optional mit Wasserdampf gemischt ist, in diese hinein zugeführt werden kann;
einen Auslass, der am anderen Ende derselben vorhanden ist und über den ein Gas einer organischen Verbindung auf Olefinbasis, das erzeugt wird, abgeleitet werden kann;
eine Gruppe poröser Röhren (4), die sich vertikal innerhalb der Reaktionssäule erstrecken;
ein Kopfteil, das mit den porösen Röhren verbunden ist, um den porösen Röhren Luft oder Sauerstoff zuzuführen;
wobei das Kohlenwasserstoffgas, das optional mit Wasserdampf gemischt ist, an der Außenseite der porösen Röhren (4) entlanggeleitet wird; und
wobei die Luft bzw. der Sauerstoff aus dem Inneren in einer Richtung senkrecht zu dem Strom von Kohlenwasserstoffgas, das optional mit Wasserdampf gemischt ist, homogen auf die Außenseite der porösen Röhren (4) geblasen wird und ein Zündsystem (9) vorhanden ist, um eine Diffusionsflammenschicht (B) an der Außenfläche der porösen Röhren (4) zu erzeugen, und die Diffusionsflammenschicht als eine Wärmequelle dient, die erforderlich ist, damit das Kohlenwasserstoffgas eine Radikalreaktion durchlaufen kann.

2. Vorrichtung zum Pyrolysieren eines Kohlenwasserstoffgases nach Anspruch 1, wobei eine nicht-poröse Röhre (7) konzentrisch zu den porösen Röhren (4) den Umfang der porösen Röhren umgebend vorhanden ist.

3. Vorrichtung zum Pyrolysieren eines Kohlenwasserstoffgases nach Anspruch 1 oder 2, wobei ein Verteiler (8) an der Einlassseite der Zersetzungsreaktionssäule (7) vorhanden ist.

4. Vorrichtung zum Pyrolysieren eines Kohlenwasserstoffgases nach den Ansprüchen 1, 2 oder 3, das des Weiteren umfasst:
einen Gaskühlabschnitt (100), der direkt mit der Zersetzungsreaktionssäule (1) verbunden ist.

## Revendications

1. Appareil servant à pyrolyser un hydrocarbure gazeux comprenant :
une colonne de réaction de décomposition (1) ayant une entrée pourvue à une extrémité de celle-ci par laquelle on peut introduire dans celle-ci un hydrocarbure gazeux, facultativement mélangé avec de la vapeur d'eau ;
une sortie pourvue à l'autre extrémité de celle-ci par laquelle on peut décharger un composé organique gazeux à base d'oléfine produit ;
un groupe de tubes poreux (4) placés verticalement à l'intérieur de ladite colonne de réaction ;
un collecteur relié aux dits tubes poreux servant à introduire de l'air ou de l'oxygène dans lesdits tubes poreux ;
dans lequel on fait circuler ledit hydrocarbure gazeux, facultativement mélangé avec de la vapeur d'eau, le long de l'extérieur desdits tubes poreux (4) ; et
dans lequel de l'air ou de l'oxygène provenant de l'intérieur est injecté de façon homogène vers l'extérieur desdits tubes poreux (4) dans une direction perpendiculaire au dit flux d'hydrocarbure gazeux, facultativement mélangé avec de la vapeur d'eau, dans lequel un système d'allumage (9) est pourvu pour former une couche de flammes de diffusion (B) sur la surface externe desdits tubes poreux (4), ladite couche de flammes de diffusion servant de source de chaleur requise pour permettre au dit hydrocarbure gazeux de subir une réaction radicalaire.

2. Appareil servant à pyrolyser un hydrocarbure gazeux selon la revendication 1, dans lequel un tube non poreux (7) est pourvu de façon concentrique par rapport aux dits tubes poreux (4) en entourant la périphérie desdits tubes poreux.

3. Appareil servant à pyrolyser un hydrocarbure gazeux selon la revendication 1 ou 2, dans lequel un distributeur (8) est pourvu du côté de l'entrée de ladite colonne de réaction de décomposition (1).

4. Appareil servant à pyrolyser un hydrocarbure gazeux selon les revendications 1, 2 ou 3, comprenant en plus:
une partie de refroidissement des gaz (100) directement reliée à ladite colonne de réaction de décomposition (1).
